# EUROPÄISCHE PATENTSCHRIFT

(11) **EP 0 899 253 B1**
(45) Veröffentlichungstag und Bekanntmachung des Hinweises auf die Patenterteilung: **23.07.2003**
(21) Anmeldenummer: 98116093.0
(22) Anmeldetag: 26.08.1998
(51) Int. Cl.: C04B 41/53, F16L 58/06

(54) **Verfahren zum Behandeln der Zementmörtelauskleidung von Rohren und Formstücken aus Stahl oder Gusseisen für Wasserleitungen**
A method of treating the cementitious coating of water-conduits made of steel or cast iron
Méthode de traitement pour le revêtement en ciment de conduites d'eau en acier ou en fonte de fer

(30) Priorität: 26.08.1997 DE 19736882; 24.10.1997 DE 19747100
(43) Veröffentlichungstag der Anmeldung: 03.03.1999
(73) Patentinhaber: Röhrenwerk Gebr. Fuchs GmbH, 57074 Siegen (DE)
(72) Erfinder: Kocks, Hans-Jürgen, Dr., 57258 Freudenberg (DE)
(74) Vertreter: Pürckhauer, Rolf, Dipl.-Ing.

(56) Entgegenhaltungen:
- EP-A- 0 629 597
- DATABASE WPI Section Ch, Week 9622 Derwent Publications Ltd., London, GB; Class E36, AN 96-217111 XP002086805 & JP 08 081289 A (MAGICMAN KK) , 26. März 1996

## Beschreibung

Die Erfindung betrifft ein Verfahren zum Behandeln von Rohren und Formstücken aus Stahl oder Gußeisen für Wasserleitungen zur Verminderung der durch die Zementmörtelauskleidung bewirkten Alkalität des Wassers.

Zementmörtelauskleidungen als Korrosionsschutz für Gußeisenund Stahlrohre zeichnen sich durch eine lange Lebensdauer und eine herausragende Schutzwirkung für das Grundmaterial aus Eisen oder Stahl aus. Die Schutzwirkung von Zementmörtelauskleidungen beruht nicht nur auf einer Barrierewirkung, sondern auch auf der hohen Porenalkalität, bedingt durch gelöste Calciumoxidanteile des Zementmörtels. Nach der Inbetriebnahme von zementmörtelausgekleideten Trinkwasserleitungen wird allmählich durch die Reaktion von Eisenoxiden mit den gelösten Calciumoxidanteilen der Poren im Phasengrenzbereich die Haftung des Zementmörtels auf der Stahl- bzw. Gußeisenoberfläche verbessert. Die gelösten alkalischen Calciumoxidanteile des Porenmediums passivieren einerseits die Stahl- bzw. Gußeisenoberfläche und ermöglichen andererseits im Falle einer Rißbildung den sogenannten Selbstheilungseffekt. Die Selbstheilung ist auf das Calcitwachstum bei der Reaktion von Calciumoxid bzw. Calciumhydroxid mit den im Wasser gelösten CO₂-Anteilen zurückzuführen. Diese Effekte beruhen auf einem komplizierten Wechselspiel zwischen dem geförderten Wasser und dem eingesetzten Zementmörtel.

Bei der Inbetriebnahme von zementmörtelausgekleideten Trinkwasserleitungen können je nach der Trinkwasserbeschaffenheit und den Netzgegebenheiten pH-Werte oberhalb des laut Trinkwasserverordnung zugelassenen Grenzwertes festgestellt werden, die in einigen Fällen aufwendige Spülmaßnahmen vor der offiziellen Freigabe erfordern. Die pH-Werterhöhungen beeinträchtigen die Trinkwasserqualität oder führen in Einzelfällen zu Kalkablagerungen in den Versorgungsnetzen und Hausinstallationen.

Beide Phänomene Kalkfällung und Alkalisierung treten insbesondere bei schwachdurchflossenen Leitungsteilen auf, wobei eine Alkalisierung bei relativ weichen Wässern beobachtet wird, während bei den harten Wässern die Kalkfällung auftreten kann. Meist führt jedoch erst die Kombination von ungünstiger Netzgegebenheit und entsprechender Wasserqualität zu den beschriebenen Schwierigkeiten.

Es sind verschiedene Verfahren bekannt, um die pH-Werte des Leitungswassers während und nach der Inbetriebnahme von Wasserleitungen aus Stahl- oder Gußeisenrohren mit einer Zementmörtelauskleidung zu senken.

Entsprechend den Empfehlungen des DVGW-Arbeitsblattes W 346 werden die Rohre mit Kohlendioxid oder hartem Wasser gefüllt, um die Carbonatisierung der Auskleidungsoberfläche zu beschleunigen.

Die EP 0 735 012 A1 beschreibt ein Verfahren zum Behandeln der Zementmörtelauskleidung von Trinkwasser führenden Rohren aus Stahl oder Gußeisen zur Bildung einer innerten Carbonatisierungsschicht im Bereich der Innenfläche der Auskleidung, bei dem die Innenfläche der Auskleidung vor dem Einbau und/oder vor der Inbetriebnahme der Rohre mit NaHCO₃ (Natriumhydrogencarbonat) behandelt wird.

Alternativ oder gleichzeitig mit der vorbeschriebenen Oberflächenbehandlung kann auch eine Calcium-Phosphatschicht auf der Innenoberfläche der Zementmörtelauskleidung gebildet werden. Dabei kann eine NaH₂PO₄ (Natrium-Dihydrogen-Phosphat) enthaltende Lösung auf die Innenoberfläche der Zementmörtelauskleidung aufgesprüht werden. Die sich bei der chemischen Reaktion bildende Schicht aus Calciumphosphat ist so dicht, daß ein Vordringen von Hydroxydionen aus dem Inneren des Zements nicht oder nur geringfügig stattfinden kann.

Aus der DE 195 24 761 C1 ist ein Verfahren zum Erzeugen einer Calciumcarbonatschicht an Zementmörtelauskleidungen von Guß- und Stahlrohren oder an zementgebundenen Rohren durch eine Beaufschlagung der Oberfläche mit CO₂-Gas bekannt, bei dem zur Beschleunigung und Intensivierung des Carbonatisierungsvorganges der relativ trockene Mörtel bei abgesaugter Luft aus dem Rohrinneren mit befeuchtetem CO₂-Gas unter Druck behandelt wird. Dieses Verfahren wird im Herstellerwerk durchgeführt, so daß eine Behandlung der Rohre an der Baustelle nicht mehr erforderlich ist.

Der Erfindung liegt die Aufgabe zugrunde, ein einfaches und kostengünstiges Verfahren zur Verminderung der alkalischen Bestandteile der Zementmörtelauskleidung von Rohren und Formstücken aus Stahl oder Gußeisen für Wasserleitungen zu entwickeln.

Diese Aufgabe wird erfindungsgemäß gelöst durch ein Verfahren, bei dem die Zementmörtelauskleidung der Rohre und Formstücke vor dem Einbau und/oder der Inbetriebnahme derselben einer chemischen oder mechanischen Behandlung unterzogen wird, um die oberste Schicht der Auskleidung abzubauen, wobei die mechanische Behandlung beispielsweise durch Bürsten oder Strahlen der Oberfläche der Zementmörtelauskleidung mit pulverförmigem, körnigem oder kugelförmigem Gut erfolgen kann.

Das erfindungsgemäße Verfahren beruht auf der Erkenntnis, daß die alkalischen Bestandteile von Wasser, das durch Rohrleitungen aus Stahl oder Gußeisen mit einer Zementmörtelauskleidung geleitet wird, aus dem Zement stammen und bei der Herstellung der Rohre an der Innen- bzw. Oberfläche der Auskleidung angereichert werden. Bei dem vom Hersteller der Rohre vorwiegend eingesetzten Auskleidungsverfahren wird die Zementmörtelschicht nach dem Einbringen des Zementes durch eine Rotation der Rohre geglättet, die eine Anreicherung von Feinkorn und damit des alkalischen Zementanteils in der Oberfläche der Auskleidung bewirkt. Diese hochalkalische Schicht kann durch eine chemische oder mechanische Behandlung der Oberfläche der Auskleidung entfernt werden. In Verbindung mit einer gezielten Auswahl der eingesetzten Zemente, vorzugsweise eines Spezialzementes mit einem Schlackenanteil von mindestens 70% können hohe pH-Werte des Wassers während und nach der Inbetriebnahme von Wasserleitungen aus Stahl- oder Gußeisenrohren mit einer Zementmörtelauskleidung reduziert werden.

## Patentansprüche

1. Verfahren zum Behandeln der Zementmörtelauskleidung von Rohren und Formstücken aus Stahl oder Gußeisen für Wasserleitungen zur Verhinderung der durch die Zementmörtelauskleidung bewirkten Alkalität des Wassers, **gekennzeichnet durch** eine chemische oder mechanische Behandlung der Zementmörtelauskleidung der Rohre und Formstücke vor dem Einbau und/oder der Inbetriebnahme derselben zum Abbau der obersten Schicht der Zementmörtelauskleidung.

2. Verfahren nach Anspruch 1, **gekennzeichnet durch** das Strahlen der Oberfläche der Zementmörtelauskleidung mit pulverförmigem, körnigem oder kugelförmigem Gut.

3. Verfahren nach Anspruch 1, **gekennzeichnet durch** das Bürsten der Oberfläche der Zementmörtelauskleidung.

4. Verfahren nach einem der Ansprüche 1 bis 3, **gekennzeichnet durch** die Verwendung eines Spezialzementes mit einem Schlackenanteil von mindestens 70 % zur Herstellung der Zementmörtelauskleidung der Rohre und Formstücke aus Stahl oder Gußeisen.

## Claims

1. Method of treating the cement mortar lining of steel and cast-iron pipes and fittings for water pipelines to prevent the alkalinity of the water caused by the cement mortar lining, **characterised by** a chemical or mechanical treatment of the cement mortar lining of the pipes and fittings, before they are installed or put into service, to break down the uppermost layer of the cement mortar lining.

2. Method according to claim 1, **characterised by** the surface of the cement mortar lining being blasted with powdery, granular or spherical-particled material.

3. Method according to claim 1, **characterised by** the brushing of the surface of the cement mortar lining.

4. Method according to one of claims 1 to 3, **characterised by** the use of a special cement containing at least 70% slag to produce the cement mortar lining of the steel or cast-iron pipes and fittings.

## Revendications

1. Procédé de traitement de revêtement en mortier au ciment de tuyaux et de pièces moulées en acier ou en fonte pour des conduites d'eau, afin d'empêcher que l'eau ne devienne alcaline sous l'effet du revêtement en mortier au ciment, **caractérisé par** un traitement chimique ou mécanique du revêtement en mortier au ciment des tuyaux ou des pièces moulées avant le montage et/ou la mise en fonctionnement de ceux-ci pour décomposer la couche supérieure du revêtement en mortier au ciment.

2. Procédé suivant la revendication 1, **caractérisé par** la projection sur la surface du revêtement en mortier au ciment de produit pulvérulent, granuleux ou sphérique.

3. Procédé suivant la revendication 1, **caractérisé par** le brossage de la surface du revêtement en mortier au ciment.

4. Procédé suivant l'une des revendications 1 à 3, **caractérisé par** l'utilisation d'un ciment spécial ayant une proportion de mâchefer d'au moins 70 % pour la production du revêtement en mortier au ciment de tuyaux ou de pièces moulées en acier ou en fonte.
